Europäisches Patentamt

European Patent Office

Office européen des brevets

(11) Numéro de publication: **0 085 627**
**B1**

(12) **FASCICULE DE BREVET EUROPEEN**

(45) Date de publication du fascicule du brevet:
**14.08.85**

(21) Numéro de dépôt: **83400205.7**

(22) Date de dépôt: **28.01.83**

(51) Int. Cl.⁴: **G 21 C 7/04**

(54) **Assemblage combustible à poison consommable.**

(30) Priorité: **03.02.82 FR 8201734**

(43) Date de publication de la demande:
**10.08.83 Bulletin 83/32**

(45) Mention de la délivrance du brevet:
**14.08.85 Bulletin 85/33**

(84) Etats contractants désignés:
**BE CH DE GB IT LI SE**

(56) Documents cités:
**DE - B - 1 273 716**
**FR - A - 1 242 102**
**FR - A - 1 334 647**
**FR - A - 2 088 009**
**FR - A - 2 246 939**
**US - A - 3 625 821**

(73) Titulaire: **Société en nom collectif FRAMATOME et COGEMA dite "FRAGEMA", Tour Fiat 1, Place de la Coupole, F-92084 Courbevoie (FR)**

(72) Inventeur: **Leclercq, Joseph Maurice Simon, 30, Route de Champagne, F-69370 Saint Didier Au Mont d'Or (FR)**

(74) Mandataire: **Fort, Jacques et al, CABINET PLASSERAUD 84, rue d'Amsterdam, F-75009 Paris (FR)**

ACTORUM AG

## Description

La présente invention concerne les assemblages combustibles de réacteur nucléaire et elle trouve une application particulièrement importante, bien que non exclusive, dans le domaine des réacteurs nucléaires à eau légère qui constitue à la fois le modérateur et le réfrigérant du réacteur.

L'invention concerne plus particulièrement un assemblage combustile de réacteur nucléaire du type comprenant un squelette comportant deux pièces d'extrémité reliées par des tubes entretoises et des grilles réparties le long des tubes et comprenant un faisceau de crayons de combustible gainé, les grilles maintenant les tubes et crayons aux nœuds d'un réseau régulier.

Des assemblages combustibles du type ci-dessus défini sont notamment utilisés dans les réacteurs à eau sous pression. Certains au moins des tubes constituent des guides dans lesquels peuvent coulisser des crayons chargés en matériau absorbant les neutrons, réunis en grappe pour constituer des barres de pilotage du réacteur. Dans une réalisation de ces assemblages, les grilles sont fixées aux tubes-guides par soudage (lorsque les matériaux constitutifs du tube et de la grille sont compatibles) ou maintenues sur les tubes-guides par des manchons enfilés sur les tubes-guides (FR-A No 246939).

Dans d'autres réalisations (FR-A No 2088009), les grilles d'entretoisement peuvent se déplacer axialement le long des tubes en cas d'allongement axial des crayons combustibles lors du fonctionnement. Dans ce cas, les grilles sont munies de manchettes montées à frottement doux sur les tubes-guides.

On a depuis longtemps proposé d'incorporer dans les assemblages des «poisons consommables», c'est-à-dire des matériaux contenant un élément ayant une forte section efficace de capture des neutrons et qui, sous l'effet des neutrons, ne produisent pas de neutrons supplémentaires et ne donnent pas naissance à des produits de filiation fortement absorbants. Parmi les éléments les plus utilisés, on peut notamment citer le gadolinium, le samarium, l'europium et, surtout, le bore (FR-A No 1504651).

On a déjà proposé de nombreuses solutions pour incorporer des poisons consommables à un assemblage. Une réalisation intéressante (FR-A No 2472247) consiste à disposer, dans certains au moins des tubes-guides, des crayons de poison consommable comportant une gaine dans laquelle sont immobilisées des pastilles annulaires de poison (verre boraté par exemple) immobilisées entre un bouchon terminal et une déformation de la gaine ou d'un tube interne. Cette disposition présente toutefois quelques inconvénients. Même après épuisement du poison, les crayons qui le contiennent introduisent une masse importante de matériaux parasites qui absorbent des neutrons et, de ce fait, réduisent le taux d'utilisation du combustible. Le crayon remplit un tube-guide et diminue le volume de l'eau légère, dont la modération, avec pour conséquence une utilisation désavantageuse du combustible lorsque le réacteur doit fonctionner avec des neutrons thermiques. Les crayons de poison et leurs structures associées occupent un volume de stockage important et pendant des durées élevées, puisqu'ils n'ont pas à être soumis à un retraitement. Une autre solution (DE-A No 1273716) consiste à introduire du poison dans un assemblage de combustible en l'incorporant dans des bandes plates qui s'étendent entre crayons de combustible adjacents, tout le long des crayons y compris à la traversée des entretoises. Cette solution a des inconvénients du même genre que la précédente.

On pourrait penser que les inconvénients ci-dessus pourraient être écartés en revêtant la surface interne de certains des tubes-guides par un substrat retenant un poison consommable. Mais il ne faut pas perdre de vue que chaque assemblage est généralement utilisé au cours de plusieurs cycles successifs et que, au-delà du premier cycle, les tubes-guides peuvent recevoir des crayons appartenant à des barres de pilotage. Dans ce cas, le frottement des crayons sur le revêtement est un facteur d'usure important. Au surplus, étant donné que les tubes-guides ont une fonction de résistance mécanique de l'assemblage, il n'est pas possible d'effectuer de tels traitements sur les tubes sans les qualifier de nouveau.

La présente invention vise à fournir un assemblage combustible répondant mieux que ceux antérieurement connus aux exigences de la pratique, notamment en ce que les inconvénients ci-dessus sont, dans une large mesure, écartés. De façon plus précise, l'invention vise à fournir un assemblage combustible à poison consommable dans lequel l'adjonction du poison s'effectue de façon simple et sans modifier les caractéristiques mécaniques de l'assemblage.

Dans ce but, l'invention propose notamment un assemblage comme revendiqué dans la revendication 1.

Les manchettes seront habituellement réalisées sous la forme d'un tronçon tubulaire de matériau résistant au réfrigérant de même nature que le tube-guide, muni d'un revêtement adhérent contenant le poison consommable. Le tronçon de tube pourra notamment être en un alliage de zirconium tel que celui connu sous la marque «Zircaloy», tandis que le revêtement adhérent contiendra du bore, sous forme de particules de carbure de bore, ou du gadolinium. On peut également envisager l'emploi de tronçons tubulaires de zirconium ou d'alliage de zirconium contenant une faible teneur de hafnium, bien que le hafnium présente des caractéristiques moins favorables que les autres poisons mentionnés plus haut.

On voit que cette réalisation permet de répartir le poison consommable entre les assemblages combustibles et au sein même d'un assemblage combustible en fonction de l'implantation de l'assemblage dans le cœur et de la répartition axiale de la puissance dans le cœur. On peut en effet prévoir des concentrations en poison consommable différentes suivant les manchettes et répartir axialement ces dernières sur les tubes-guides pour tenir compte de la répartition axiale de puissance.

On voit par ailleurs que les manchettes sont faciles à implanter et à répartir et que leur fabrication n'a pas la complexité de celles de crayons, qui impliquent le pastillage de poison consommable, le chargement de pastilles dans les gaines, le soudage des gaines et les opérations de contrôle ultérieures. Enfin, les manchettes n'ayant aucune fonction mécanique et pouvant comporter un tronçon tubulaire support en matériau identique à celui des tubes-guides évitent toute épreuve de qualification mécanique et garantissent une tenue satisfaisante en pile.

L'invention sera mieux comprise à la lecture de la description qui suit d'assemblages qui constituent des modes particulier de réalisation de l'invention, donnés à titre d'exemples non limitatifs.

La description se réfère aux dessins qui l'accompagnent, dans lesquels:

la fig. 1 montre schématiquement, en élévation, les éléments concernés par l'invention d'un assemblage de combustible constituant un premier mode de réalisation;

la fig. 2 est une vue à grande échelle montrant un mode possible de fixation d'une manchette de poison sur un tube-guide, dans l'assemblage de la fig. 1;

la fig. 2a, similaire à une fraction de la fig. 2, montre une variante de réalisation;

la fig. 3, similaire à la fig. 1, montre un autre mode de réalisation;

la fig. 4 est un schéma en perspective à grande échelle montrant un mode possible de fixation des manchettes dans l'assemblage de la fig. 3;

les fig. 5 et 6, similaires à la fig. 3, montrent d'autres modes de réalisation encore de l'invention.

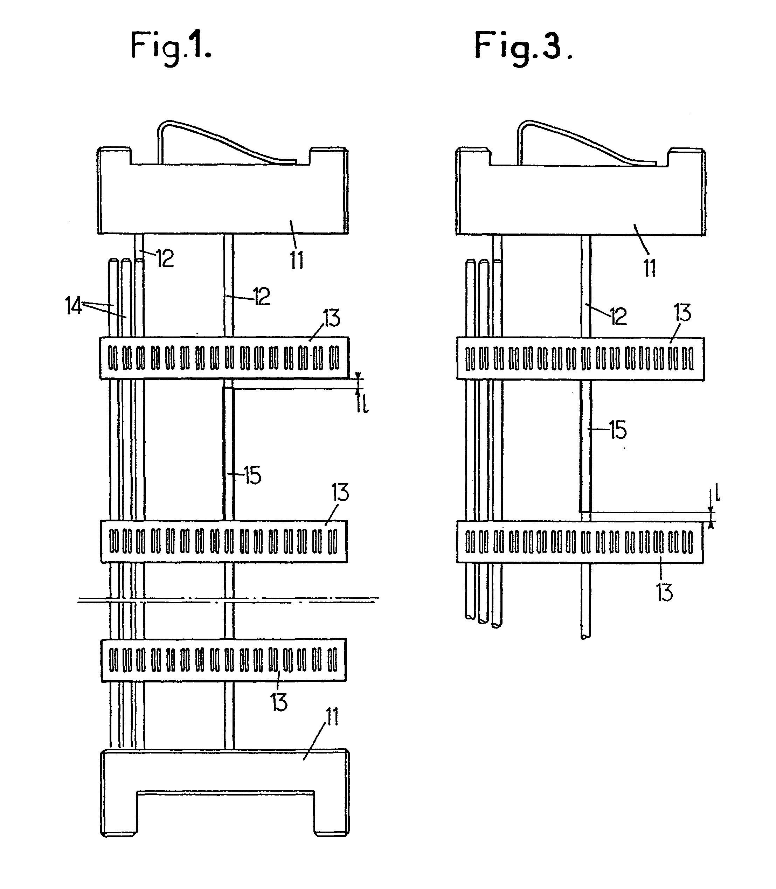

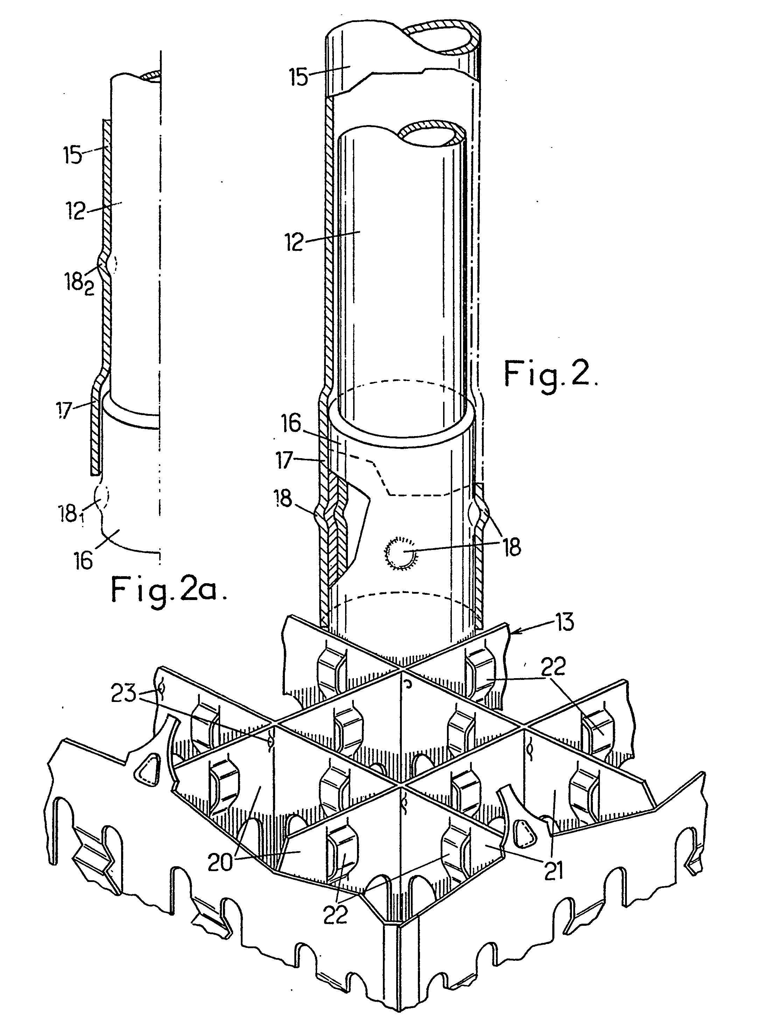

L'assemblage combustible dont certains éléments sont montrés en fig. 1 peut avoir la constitution générale utilisée largement à l'heure actuelle dans les réacteurs à eau sous pression, par exemple celle décrite dans le brevet FR-A No 2384323 auquel on pourra se reporter. Le squelette de l'assemblage comprend deux pièces d'extrémité 11 reliées par des tubes-guides 12 en alliage de zirconium tel que celui désigné par la marque «Zircaloy». Le squelette comporte également des grilles 13 en alliage désigné par la marque «Inconel» réparties dans l'intervalle qui sépare les pièces d'extrémité 11. Les crayons combustibles 14 sont supportés et maintenus suivant un réseau carré par les grilles 13 dont certains nœuds sont occupés par les tubes-guides 12. Ces grilles 13 (fig. 2) comportent deux jeux de bandes 20 et 21 entrecroisées et munies de bossettes 22 et des ressorts (non représentés) de maintien élastique des crayons 14. Des bossages supplémentaires 23 assurent le maintien précis des bandes 20 et 21 les unes par rapport aux autres.

Certains au moins des tubes-guides 12 portent une ou plusieurs manchettes de poison consommable. Chacune des manchettes 15 en «Zircaloy» entoure un tube-guide 12 entre deux grilles 13 ou entre une grille et une pièce d'extrémité 11. La partie basse de la manchette 15 est sensiblement au contact de la grille 13 ou de la pièce 11 placée au-dessous, sur laquelle il peut reposer. La longueur de la manchette est telle qu'il subsiste, avant mise en service, un jeu 1 entre l'extrémité haute de la manchette et la grille ou la pièce d'extrémité placée au-dessus. Ce jeu 1 est choisi de façon à être suffisant pour éviter un arc-boutement de la manchette provoqué par les dilatations différentielles dues à la température et à l'irradiation, mais ce jeu est maintenu à une valeur minimum pour que l'absence locale d'absorbant neutronique n'introduise pas de pics de flux neutronique significatifs dans le cœur. Dans le cas de la fig. 1, ce jeu sera avantageusement compris entre 0,3 et 1,0 mm, pour un assemblage utilisé de manière courante sur les réacteurs actuels à eau sous pression de 900 MW, dans lesquels l'espace intergrilles est d'environ 500 mm.

Diverses solutions peuvent être adoptées pour fixer les manchettes 15. Dans le mode de réalisation montré en fig. 2, utilisable notamment lorsque la grille 13 est en «Inconel» et le tube-guide 12 en «Zircaloy», on solidarise le tube-guide 12 et la partie terminale de la manchette 15 par l'intermédiaire d'un manchon 16 fixé de façon permanente à la grille, généralement par soudage. De façon identique, ce résultat peut être obtenu par brasage. Pour cela, la manchette 15 présente une partie terminale 17 élargie de façon à pouvoir se glisser à frottement doux sur le manchon 16, traversé par le tube-guide 12. On déforme alors par expansion l'ensemble constitué par le tube-guide, le manchon et la manchette, avantageusement en quatre zones 18 situées au droit des arêtes de la cellule formée par les grilles 13 et occupée par le tube-guide. On réduit ainsi au maximum les perturbations apportées à l'écoulement du réfrigérant.

Dans la variante de réalisation montrée en fig. 2a, la fixation de la manchette 15 s'effectue en deux étapes. Dans une première étape, on fixe le manchon 16 sur le tube-guide 12 par déformation radiale localisée ou circonférentielle, par expansion dans des zones $18_1$ ou par roulage. Puis on fixe la manchette 15 au tube-guide 12, dans la zone non renflée de la manchette, également par expansion localisée ou circonférentielle en $18_2$. La partie terminale renflée 17 de la manchette 15 est dans ce cas engagée à frottement doux sur le manchon 16 au-dessus des zones déformées $18_1$.

Comme indiqué plus haut, les manchettes sont avantageusement constituées par un support en matériau à base de zirconium, tel que le «Zircaloy» qui a l'avantage d'être transparent aux neutrons, de sorte qu'une fois le poison consommable épuisé à la suite du premier passage du combustible en réacteur, la présence des manchettes ne se traduira par aucune absorption de neutrons et permettra une meilleure utilisation de l'énergie libérée par l'assemblage lors des cycles ultérieurs de passage en réacteur. Le poison consommable, généralement constitué par un composé de bore ou de gadolinium, doit présenter avec le support une liaison métallurgique suffisante pour résister à l'action du réfrigérant. Dans un réacteur à eau légère, cette liaison pourra être effectuée par projection à chaud d'un mélange du composé et d'un liant métallique, tel que le nickel, compatible avec la tenue à la corrosion et ayant une transparence satisfaisante aux neutrons.

L'encombrement radial de chaque manchette et de ses moyens de fixation doit être tel que la manchette n'apporte pas de perturbations notables à l'écoulement et au refroidissement du combustible. Cette condition impose notamment une épaisseur aussi faible que possible des manchettes revêtues du poison. L'épaisseur limite du substrat est imposée par le procédé d'application du revêtement qui est fonction de la teneur en poison nécessaire. A titre d'exemple, on peut indiquer qu'on peut réaliser des manchettes revêtues ayant une épaisseur de l'ordre de 0,5 mm dont une épaisseur de 0,3 mm pour le support en «Zircaloy».

Grâce à l'emploi de manchettes suivant l'invention, on peut réaliser toute répartition souhaitable du poison neutronique dans un assemblage. On peut en particulier placer des manchettes 15 à forte concentration en poison consommable dans la partie médiane de tous les tubes-guides ou d'une partie d'entre eux, tandis que les parties terminales de ces mêmes tubes-guides ou bien ne portent pas de manchettes, ou bien portent des manchettes à faible concentration en poison consommable.

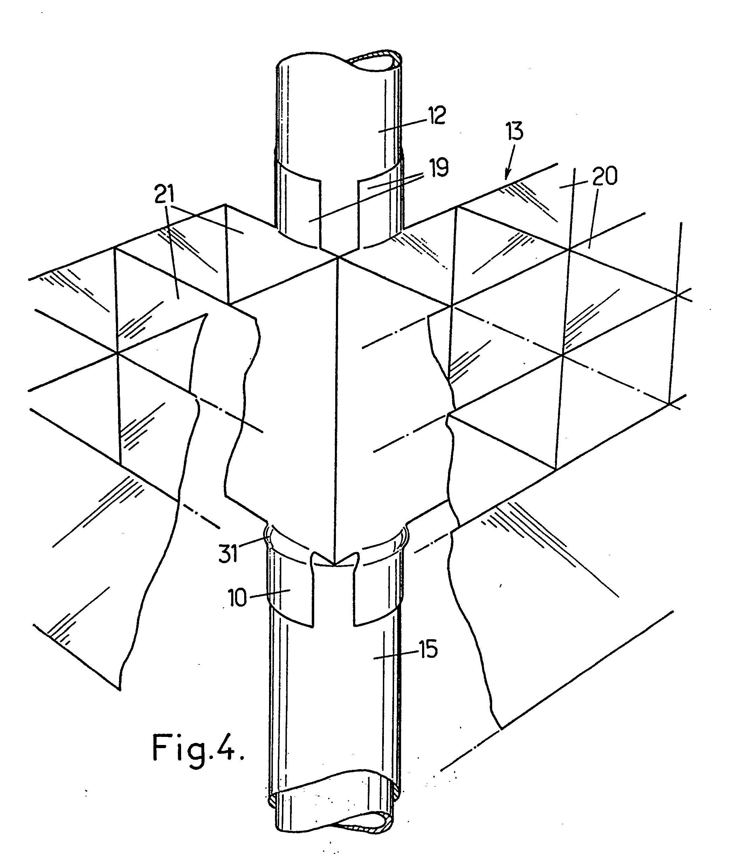

On décrira maintenant, en faisant référence à la fig. 3, un mode de réalisation particulièrement utilisable dans le cas où les tubes-guides 12 et les grilles 13 sont constitués en métaux ou alliages identiques ou compatibles. Le mode de réalisation de la fig. 3 est notamment utilisable lorsque les grilles 13 et les tubes-guides 12 sont en «Zircaloy». Chaque manchette 15 est cette fois fixée par son extrémité haute à une grille 13 et le jeu 1 est prévu entre l'extrémité basse de la manchette 15 et l'organe situé au-dessous (grille ou pièce d'extrémité). Le jeu 1 est cette fois choisi non seulement en fonction des deux critères mentionnés plus haut (valeur minimale, mais compatible avec la libre dilatation différentielle des composants), mais aussi pour permettre la fixation de la grille sur le tube-guide. Dans le cas d'une grille, cette fixation peut s'effectuer par soudage comme indiqué sur la fig. 4. On voit sur cette figure que les bandes 20 et 21 sont solidaires de pattes ou languettes 10 et 19 prédécoupées et préformées, par exemple par emboutissage, pour constituer, dans le cas de la languette 10, une déformation 31 correspondant à la surépaisseur représentée par la manchette 15 à la partie basse de la grille. Le soudage des pattes 10 à la partie basse et 19 à la partie haute peut s'effectuer de façon classique d'une part sur les tubes-guides, d'autre part sur la manchette.

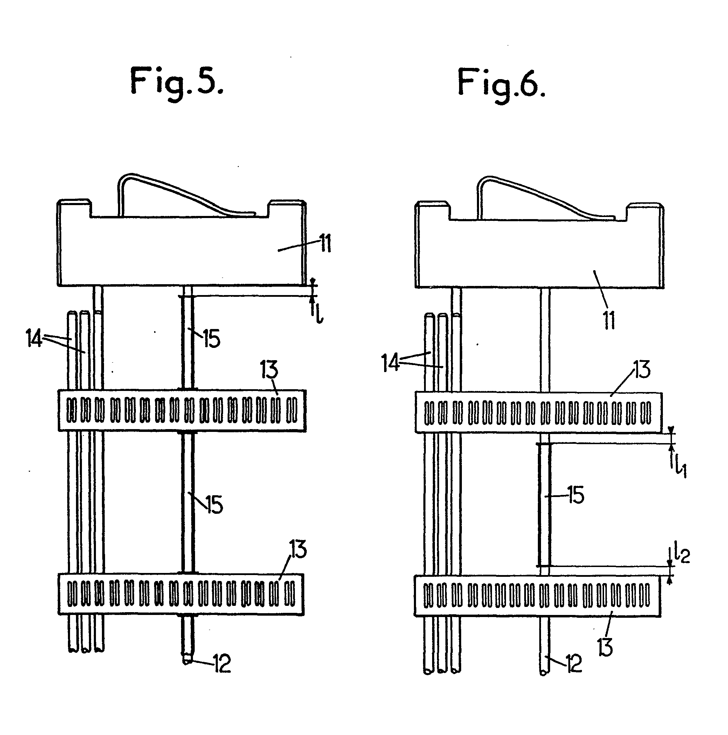

Dans la variante de réalisation représentée en fig. 5, l'assemblage combustible est du genre décrit dans le brevet FR-A N° 2088009, c'est-à-dire qu'il comprend des grilles 13 montées flottantes le long des tubes-guides. Dans ce cas, les manchettes 15 jouent le rôle d'entretoises pour les grilles 13. Le jeu 1 est cette fois prévu pour tolérer l'allongement axial des crayons combustibles 14 sous irradiation entre les grilles flottantes, et donc les manchettes 15 peuvent avoir une longueur égale à l'écartement initial des grilles.

Enfin, dans la variante montrée en fig. 6, les grilles 13 sont fixées aux tubes-guides, par des moyens qui peuvent être quelconques et notamment ceux montrés en fig. 2, 2a ou 3. Chacune des manchettes 15 est montée flottante entre deux grilles 13 ou entre une grille et une pièce d'extrémité 11. Le jeu total 1 sera alors égal à la somme des jeux d'extrémité $1_1$ et $1_2$. Ce jeu total 1, encore déterminé pour remplir les critères mentionnés plus haut, facilite de plus, lors de la fabrication, la fixation des grilles 13 aux tubes-guides 12.

Bien que l'invention ait surtout été décrite dans son application à des assemblages combustibles pour réacteur à eau légère de type classique, elle est susceptible de nombreux autres modes de réalisation, soit destinés à des réacteurs à eau légère à variation du spectre énergétique des neutrons au cours de la vie du réacteur, soit à des réacteurs utilisant un réfrigérant autre que l'eau légère.

Il va sans dire que la portée du présent brevet s'étend à de telles variantes.

**Revendications**

1. Assemblage combustible de réacteur nucléaire comprenant un squelette comportant deux pièces d'extrémité (11) reliées par des tubes entretoises (12) et des grilles (13) réparties le long des tubes (12) et comprenant un faisceau de crayons de combustible gainé (14), les grilles maintenant les tubes et les crayons aux nœuds d'un réseau régulier, assemblage comportant des manchettes (15) qui sont rapportées sur les tubes, caractérisé en ce que les manchettes contiennent un poison neutronique consommable.

2. Assemblage suivant la revendication 1, caractérisé en ce que chaque manchette est constituée par un support, formé par un tronçon tubulaire de matériau résistant au réfrigérant de même nature que le tube-guide, muni d'un revêtement adhérent contenant le poison consommable.

3. Assemblage suivant la revendication 2, caractérisé en ce que le tronçon de tube est en alliage de zirconium, tandis que le revêtement adhérent contient du bore ou du gadolinium.

4. Assemblage suivant l'une des revendications 2 ou 3, caractérisé en ce que le revêtement de poison consommable est lié au support par un liant métallique tel que le nickel.

5. Assemblage suivant l'une des revendications 1 à 4, caractérisé en ce que les grilles (13) sont fixées aux tubes (12) par déformation du tube-guide et d'un manchon (16) soudé à la grille.

6. Assemblage suivant la revendication 5, caractérisé en ce que chaque manchette est fixée à son tube-guide par déformation locale ou circonférentielle de l'ensemble constitué par le tube-guide (12), le manchon (16) et une partie terminale renflée (17) de la manchette (15).

7. Assemblage suivant la revendication 5, caractérisé en ce que chaque manchette est fixée à son tube-guide par déformation locale ou circonférentielle de l'ensemble du tube-guide et de la manchette en une zone ($18_2$) distincte de la

zone (18₁) de fixation du manchon sur le tube-guide.

8. Assemblage combustible suivant l'une des revendications 1 à 4, caractérisé en ce que les grilles (13) présentent, de chaque côté, des doigts ou pattes (10, 19) destinés à être respectivement soudés à une manchette (15) et à un tube-guide (12).

9. Assemblage suivant l'une des revendications précédentes, caractérisé en ce que les manchettes (15) ont une longueur inférieure à l'espacement entre une grille (13) et une pièce d'extrémité (11) ou entre deux grilles (13) consécutives entre lesquelles elles sont montées pour autoriser leur libre dilatation différentielle ainsi que celle des constituants de l'assemblage.

10. Assemblage suivant la revendication 9, destiné à un réacteur nucléaire à eau sous pression et dans lequel l'espace entre grilles est d'environ 500 mm, caractérisé en ce que la différence entre ledit espace nominal et la longueur des manchettes est comprise entre 0,3 et 1 mm.

**Patentansprüche**

1. Brennelementbündel für Kernreaktoren, das ein Skelett mit zwei äusseren Endstücken (11) aufweist, die durch Zwischenrohre (12) verbunden sind und Gitterroste (13), die entlang der Rohre (12) verteilt sind, und ein eng umschliessendes Brennstabbündel (14), wobei die Gitterroste die Rohre und die Stäbe mit den Maschen eines regelmässigen Geflechtes halten, und wobei das Bündel Manschetten (15) beinhaltet, die auf die Röhre aufgesetzt sind, dadurch gekennzeichnet, dass die Manschetten ein aufbrauchbares Neutronengift enthalten.

2. Bündel nach Anspruch 1, dadurch gekennzeichnet, dass jede Manschette aus einem Träger, der aus einem Rohrstück aus kühlmittelresistentem Material und von derselben Art wie das Führrohr geformt ist, gebildet ist, der mit einem anhaftenden Überzug versehen ist, der das aufbrauchbare Gift beinhaltet.

3. Bündel gemäss Anspruch 2, dadurch gekennzeichnet, dass das Rohrstück aus einer Zirkoniumlegierung besteht, während der anhaftende Überzug Bor oder Gadolinium enthält.

4. Bündel nach einem der beiden Ansprüche 2 oder 3, dadurch gekennzeichnet, dass der Überzug aus aufbrauchbarem Gift durch ein metallisches Bindemittel wie Nickel mit dem Träger verbunden ist.

5. Bündel nach einem der Ansprüche 1 bis 4, dadurch gekennzeichnet, dass die Gitterroste (13) durch Deformation des Führrohres und einer mit dem Gitterrost verschweissten Hülse (16) an den Rohren (12) befestigt sind.

6. Bündel nach Anspruch 5, dadurch gekennzeichnet, dass jede Manschette durch örtliche oder umfangsmässige Deformation des aus dem Führrohr (12), der Hülse (16) und einem aufgeweiteten Endstück (17) der Manschette (15) bestehenden Komplexes mit ihrem Führrohr verbunden ist.

7. Bündel nach Anspruch 5, dadurch gekennzeichnet, dass jede Manschette durch örtliche oder umfangsmässige Deformation des Komplexes aus Führrohr und Manschette in einer von der Zone (18₁) der Fixierung der Hülse auf dem Führrohr unterschiedenen Zone (18₂) mit ihrem Führrohr verbunden ist.

8. Brennelementbündelung nach einem der Ansprüche 1 bis 4, dadurch gekennzeichnet, dass die Gitterroste (13), auf jeder Seite Stutzen oder Klauen (10, 19) zur jeweiligen Verschweissung mit einer Manschette (15) und mit einem Führrohr (12) aufweisen.

9. Bündel nach einem der vorhergehenden Ansprüche, dadurch gekennzeichnet, dass die Manschetten (15) eine geringere Länge aufweisen als der Abstand zwischen einem Gitterrost (13) und einem ausseren Endstück (11), oder zwischen zwei aufeinanderfolgenden Gitterrosten (13) zwischen denen sie eingerichtet sind, zur Ermöglichung ihrer freien Ausgleichsdehnung sowie die der Bestandteile des Bündels.

10. Bündel nach Anspruch 9 für einen nuklearen Druckwasserreaktor in dem der Abstand zwischen den Gitterrosten ungefährt 500 mm beträgt, dadurch gekennzeichnet, dass die Differenz zwischen diesem Nominalabstand und der Länge der Manschetten zwischen 0,3 und 1 mm beträgt.

**Claims**

1. A fuel assembly for nuclear reactor, comprising a skeleton frame having two end pieces (11) connected by spacer tubes (12) and having grids (13) distributed along the tubes (12) and containing a cluster of canned fuel rods (14), wherein the grids hold the tubes and the rods at the nodes of a regular lattice, said assembly comprising sleeves (15) fitted onto the tubes, characterized in that the sleeves contain a burnable neutron poison.

2. Assembly according to Claim 1, characterized in that each sleeve is formed by a support made of a length of tubing of a coolant resistant material having the same nature as the guide tube, provided with an adhering coating containing the burnable poison.

3. Assembly according to Claim 2, characterized in that the length of turbing is made of zirconium alloy and the adhering coating contains boron or gadolinium.

4. Assembly according to Claim 2 or 3, characterized in that the coating of burnable poison is joined to the support by a metal-bonding agent such as nickel.

5. Assembly according to any one of Claims 1 to 4, characterized in that the grids (13) are fixed to the tubes (12) by deforming the guide tube and a coupling sleeve (16) welded to the grid.

6. Assembly according to Claim 5, characterized in that each sleeve is attached to the associated guide tube by local or circumferential deformation of a unit formed by the guide tube (12), the coupling sleeve (16) and a bulged end section of the sleeve (15).

7. Assembly according to Claim 5, characterized in that each sleeve is secured to its guide tube by local or circumferential deformation of the assembly consisting of the guide tube and sleeve at a zone ($18_2$) which is separate from the zone ($18_1$) for fixing the coupling sleeve to the guide tube.

8. Fuel assembly according to any one of Claims 1 to 4, characterized in that the grids (13) have, on both sides, fingers or lugs (10, 19) arranged for welding to a sleeve (15) and to a guide tube (12) respectively.

9. Assembly according to any one of the preceding claims, characterized in that the sleeves (15) have a length which is lower than the spacing between a grid (13) and an end piece (11) or between two successive grids (13) between which they are located, whereby free differential expansion of the sleeves and of the components of the assembly is allowed.

10. Assembly according to Claim 9, for a pressurized water nuclear reactor in which the space between grids is approximately 500 mm, characterized in that the difference between said set space and the length of the sleeves is of from 0.3 to 1 mm.

# Fig.1.

# Fig.3.

Fig.2.

Fig.2a.

Fig.4.

# Fig.5.

# Fig.6.